# EUROPEAN PATENT APPLICATION

(11) **EP 4 614 677 A1**
(43) Date of publication of application: **10.09.2025**
(21) Application number: 24161354.6
(22) Date of filing: 05.03.2024
(51) Int. Cl.: H01M 10/625, H01M 50/204, H01M 50/209, H01M 50/249, H01M 50/271, H01M 50/284, H01M 50/30, H01M 50/367

(54) **A BATTERY PACK AND A VEHICLE**

(71) Applicant: VOLVO TRUCK CORPORATION, 405 08 Göteborg (SE)
(72) Inventor: Rout, Dhirendra, 422 54 Göteborg (SE); Pawar, Tejas, 418 70 Göteborg (SE)
(74) Representative: Kransell & Wennborg KB

(57) **Abstract**

The disclosure relates to a battery pack (1) comprising a plurality of electrochemical battery cells (10), wherein:
- each battery cell (10) comprises a top surface (11) facing upwardly in a height direction (H), wherein the top surface (11) comprises a vent opening (12),
- the battery pack (1) comprises a top cover (2),
- the battery pack (1) further comprises a venting channel member (3) which is attached to an inside (21) of the top cover (2) such that it forms a longitudinally extending venting channel (VC),
- the battery pack (1) further comprises, for at least one battery cell (10) of the plurality of electrochemical battery cells (10), a chimney member (4) for the vent opening (12), wherein the chimney member (4) is configured such that it forms a fluid pathway (41) from the top surface (11) to the longitudinally extending venting channel (VC).

## Description

### TECHNICAL FIELD

The disclosure relates generally to energy storage systems. In particular aspects, the disclosure relates to a battery pack, a vehicle and a method for manufacturing a battery pack. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack, which also may be denoted as an energy storage system, typically comprises a plurality of electrically connected electrochemical battery cells. The battery pack may for example be used in an electric vehicle, such as a fully electric or a hybrid vehicle. Accordingly, the battery pack may be electrically connected to one or more electric motors of the vehicle, wherein electrical energy stored in the electrochemical battery cells is used for driving the electric motor(s). The one or more electric motors may also be used as generators and may hence recharge the electrochemical battery cells.

The electrochemical battery cells may generate hot gas and/or particles during use and therefore it may be a need to have a venting function which allows the hot gas and/or particles to be ejected from the cells without damaging the cells. Hence, there is a strive to develop improved technology relating to cell degassing in a battery pack, such as a strive to provide a safe, cost-effective, reliable and/or robust configuration.

### SUMMARY

According to a first aspect of the disclosure, there is provided a battery pack comprising a plurality of electrochemical battery cells. The battery pack has a longitudinal extension in a longitudinal direction, a width extension in a width direction and a height extension in a height direction, wherein:
- each battery cell of the plurality of electrochemical battery cells comprises a top surface facing upwardly in the height direction, wherein the top surface comprises a vent opening for discharging hot gases and/or particles from the battery cell,
- the battery pack comprises a top cover arranged to cover the top surfaces of the plurality of electrochemical battery cells,
- the battery pack further comprises a venting channel member which is attached to an inside of the top cover such that it forms a longitudinally extending venting channel between the venting channel member and the top cover,
- the battery pack further comprises, for at least one battery cell of the plurality of electrochemical battery cells, a chimney member for the vent opening, wherein the chimney member is configured such that it forms a fluid pathway extending in the height direction from the top surface to the longitudinally extending venting channel. The first aspect of the disclosure may seek to provide a battery pack with an improved and cost-effective venting function for at least one of the battery cells, or for a plurality of the battery cells, such as for all of the battery cells. A technical benefit may include that a cost-effective, robust and/or reliable configuration is achieved, wherein hot gases and/or particles will be ejected through the chimney member to the longitudinally extending venting channel. For example, by the provision of the chimney member and the longitudinally extending venting channel as disclosed herein, hot gases and/or particles ejected from a battery cell can be avoided to reach or negatively affect another one of the battery cells. Accordingly, this may result in a more reliable, robust and safe configuration. As another example, by the provision of the chimney member and the longitudinally extending venting channel as disclosed herein, a sealed pathway for hot gases and/or particles may be enabled in a cost-effective manner, e.g., requiring fewer parts and/or less expensive parts.

Optionally in some examples, including in at least one preferred example, the chimney member and the venting channel member are configured such that a leak-free fluid connection from the vent opening to the longitudinally extending venting channel is provided. A technical benefit may include that the risk of hot gases and/or particles reaching another battery cell may be reduced. By a leak-free fluid connection is herein meant that gases and/or particles may not leak out at any location along the fluid connection between an inlet of the chimney member at the vent opening and an outlet of the chimney member at the longitudinally extending venting channel.

Optionally in some examples, including in at least one preferred example, the chimney member has a radial extension along a radial direction which is perpendicular to a center axis thereof, wherein the center axis is preferably parallel to the height direction, and wherein the chimney member and the venting channel member are attached to each other via a radial sealing interface. A technical benefit may include that an improved sealed connection is achieved between the chimney member and the venting channel member.

Optionally in some examples, including in at least one preferred example, the radial sealing interface is provided at a radially outer peripheral surface of the chimney member and/or at a radially inner peripheral surface of the chimney member. A technical benefit may include that a favorable location of the sealing interface is provided, which may imply an improved sealed connection.

Optionally in some examples, including in at least one preferred example, the chimney member extends in the height direction into a portion of the venting channel member. A technical benefit may include an improved connection between the chimney member and the venting channel member, which may result in a reduced risk of gas leakage.

Optionally in some examples, including in at least one preferred example, a portion of the venting channel member extends in the height direction into the fluid pathway of the chimney member. A technical benefit may include an improved connection between the chimney member and the venting channel member, which may result in a reduced risk of gas leakage.

Optionally in some examples, including in at least one preferred example, the inside of the top cover which the venting channel member is attached to is a ceiling surface facing downwardly in the height direction towards the top surfaces of the battery cells. A technical benefit may include that a more beneficial location of the longitudinally extending venting channel is provided. For example, this may result in a gap between the top surfaces of the battery cells and the longitudinally extending venting channel. As another example, by forming the longitudinally extending venting channel by use of the ceiling surface, fewer additional components may be required for enabling the venting function.

Optionally in some examples, including in at least one preferred example, the battery pack is configured such that the venting channel member is offset from the top surfaces of the battery cells, as seen in the height direction. A technical benefit may include that a gap may thereby be provided between the top surfaces of the battery cells and the longitudinally extending venting channel. This may result in a reduced risk of damaging the battery cells.

Optionally in some examples, including in at least one preferred example, the venting channel member is attached to the inside of the top cover such that it forms a leak-free longitudinally extending venting channel. A technical benefit may include a reduced risk of gas leakage in the vicinity of the top surfaces of the battery cells.

Optionally in some examples, including in at least one preferred example, the venting channel member is attached to the inside of the top cover by heat staking such that it forms a leak-free longitudinally extending venting channel. A technical benefit may include an improved leak-free attachment.

Optionally in some examples, including in at least one preferred example, the longitudinally extending venting channel comprises at least one discharge opening for discharging hot gases and/or particles from the battery cells to an external environment with respect to the battery pack. A technical benefit may include a reduced risk of hot gases and/or particles being discharged inside the battery pack.

Optionally in some examples, including in at least one preferred example, the battery pack further comprises, for the at least one battery cell of the plurality of electrochemical battery cells, a carrier, wherein the carrier is provided above the top surface and is arranged to carry busbars and/or auxiliary electronic equipment, and wherein the chimney member is connected to or integrated with the carrier. A technical benefit may include that the chimney member is part of another member, i.e. the carrier, which also is used to carry other components. This may result in a cost-effective and/or space efficient configuration.

Optionally in some examples, including in at least one preferred example, the venting channel member has a U-formed cross-sectional profile, as seen in a plane which is perpendicular to the longitudinal direction. A technical benefit may include that a favorable form of the longitudinally extending venting channel may be provided.

Optionally in some examples, including in at least one preferred example, the venting channel member is an extruded component or a molded component. A technical benefit may include that a cost-effective configuration is achieved.

Optionally in some examples, including in at least one preferred example, the venting channel member comprises or consists of a polymer, such as a fiber reinforced polymer. A technical benefit may include a cost-effective and/or lightweight configuration.

Optionally in some examples, including in at least one preferred example, the venting channel member comprises a flat surface facing upwardly in the height direction outside at least one lateral side of the longitudinally extending venting channel, as seen in the width direction, wherein the flat surface forms an attachment interface between the inside of the top cover and the venting channel member. A technical benefit may include that a leak-free and more robust attachment is enabled in a cost-effective manner.

Optionally in some examples, including in at least one preferred example, the venting channel member comprises a longitudinally extending groove on at least one lateral side of the longitudinally extending venting channel, as seen in the width direction, which groove is at least partly provided below a top portion of the chimney member such that particles can be received in the groove. A technical benefit may include that particles can be stored in the groove, reducing e.g. the risk that particles obstruct the venting function over time.

Optionally in some examples, including in at least one preferred example, the plurality of electrochemical battery cells are prismatic battery cells which are stacked next to each other along the longitudinal direction. A technical benefit may include that a battery pack with high energy density is provided in a cost-effective manner.

Optionally in some examples, including in at least one preferred example, the battery pack further comprises a housing for the plurality of electrochemical battery cells, wherein the top cover is attached to the housing such that it forms a leak-free connection therebetween. A technical benefit may include that a robust and reliable battery pack is provided, comprising an improved venting function.

According to a second aspect of the disclosure, a method for manufacturing a battery pack according to any one of the examples of the first aspect of the disclosure is provided. The method comprises:
- attaching the venting channel member to the inside of the top cover, and
- for the at least one battery cell of the plurality of electrochemical battery cells, providing the chimney member for the vent opening such that it forms a fluid pathway extending in the height direction from the top surface to the longitudinally extending venting channel.
The second aspect of the disclosure may seek to provide a battery pack with an improved and cost-effective venting function for at least one of the battery cells, or for a plurality of the battery cells, such as for all of the battery cells. A technical benefit may include that a cost-effective, robust and/or reliable configuration is achieved, wherein hot gases and/or particles will be ejected through the chimney member to the longitudinally extending venting channel. For example, by the provision of the chimney member and the longitudinally extending venting channel as disclosed herein, hot gases and/or particles ejected from a battery cell can be avoided to reach or negatively affect another one of the battery cells. Accordingly, this may result in a more reliable, robust and safe configuration. As another example, by the provision of the chimney member and the longitudinally extending venting channel as disclosed herein, a sealed pathway for hot gases and/or particles may be enabled in a cost-effective manner, e.g., requiring fewer parts and/or less expensive parts.

According to a third aspect of the disclosure, a vehicle comprising a battery pack according to any one of the examples of the first aspect of the disclosure is provided. Technical benefits and advantages of the third aspect of the disclosure are analogous to the technical benefits and advantages of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery pack in a sectional view according to an example.
**FIG. 3** is an exemplary battery pack in an enlarged sectional view according to an example.
**FIG. 4** is an exemplary battery pack in a perspective view according to an example.
**FIG. 5** is an exemplary top cover and venting channel members of a battery pack in a perspective view according to an example.
**FIG. 6** is an exemplary venting channel member of a battery pack in a perspective view according to an example.
**FIGS. 7a****-d** are exemplary schematic sectional views of connection interfaces of a chimney member and a venting channel member according to examples.
**FIG. 8** is an exemplary flowchart of a method according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

The present disclosure may seek to provide an improved battery pack, such as a battery pack for an at least party electric vehicle, which is reliable, robust and safe, and has a cost-effective configuration. For example, an aim of the present disclosure is to provide an improved venting function in a cost-effective manner. Furthermore, an aim of the present disclosure is to provide an improved battery pack which at least partly overcomes one or more drawbacks of the prior art, or which at least is a suitable alternative.

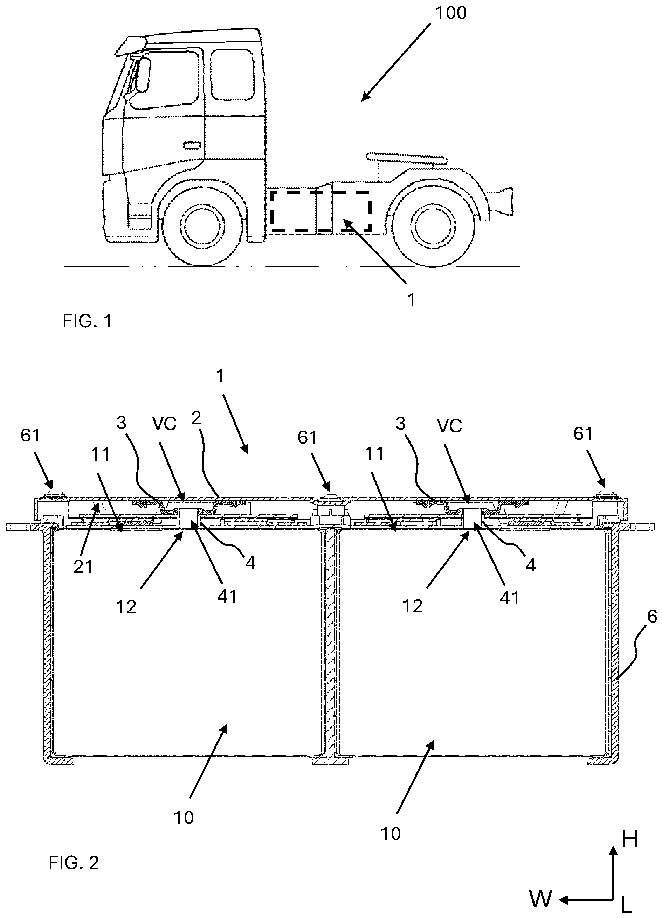

**FIG. 1** is an exemplary vehicle 100 in a side view according to an example. The vehicle 100 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 100 comprises a battery pack 1 according to an example disclosed herein. The battery pack 1 may at least partly be used for driving one or more electric motors (not shown) of the vehicle 100. The vehicle 100 may accordingly be an electric vehicle or a hybrid vehicle, i.e., a vehicle which at least partly uses electric power for propulsion. The battery pack 1 as disclosed herein may also be used in a stationary unit, such as a building and/or any stationary machinery.

**FIG. 2** is an exemplary battery pack 1 in a sectional view according to an example. The sectional view is perpendicular to the longitudinal direction L. For example, the battery pack 1 in FIG. 2 may be the battery pack 1 in FIG. 1.

The battery pack 1 comprises a plurality of electrochemical battery cells 10. The battery pack 1 has a longitudinal extension in a longitudinal direction L, a width extension in a width direction W and a height extension in a height direction H. The longitudinal direction L in FIG. 2 extends in a direction which is perpendicular to the view in FIG. 2. The directions L, Hand W may correspond to a Cartesian coordinate system, i.e. the directions L, Hand W are perpendicular to each other. In some examples, the height direction H may correspond to a vertical direction when the battery pack 1 is provided on a flat horizontally extending surface, such as when mounted in the vehicle 100.

In this example, the electrochemical battery cells 10 are prismatic electrochemical battery cells 10, i.e. box-shaped or brick-shaped, with electrical terminals (not shown) facing upwardly in the height direction H. The prismatic battery cells 10 are stacked next to each other along the longitudinal direction L. In this example, there are two parallel rows of stacked prismatic battery cells 10. It shall however be noted that in other examples there may be more rows or only one row of battery cells. Even though prismatic battery cells 10 are shown, other types of battery cells are also conceivable, such as cylindrical battery cells with electrical terminals facing upwardly in the height direction H.

Each battery cell 10 of the plurality of electrochemical battery cells 10 comprises a top surface 11 facing upwardly in the height direction H, wherein the top surface 11 comprises a vent opening 12 for discharging hot gases and/or particles from the battery cell 10.

The battery pack 1 comprises a top cover 2 arranged to cover the top surfaces 11 of the plurality of electrochemical battery cells 10. The battery pack 1 further comprises a venting channel member 3 which is attached to an inside 21 of the top cover 2 such that it forms a longitudinally extending venting channel VC between the venting channel member 3 and the top cover 2.

The battery pack 1 further comprises, for at least one battery cell 10 of the plurality of electrochemical battery cells 10, a chimney member 4 for the vent opening 12, wherein the chimney member 4 is configured such that it forms a fluid pathway 41 extending in the height direction H from the top surface 11 to the longitudinally extending venting channel VC. In this example, a chimney member 4 configured as in the above is provided for each battery cell 10 of the plurality of electrochemical battery cells 10. It shall be noted that such a chimney member may be provided for one or more of the battery cells 10 of the battery pack.

As may be gleaned from FIG. 2, the chimney member 4 and the venting channel member 3 are preferably configured such that a leak-free fluid connection from the vent opening 12 to the longitudinally extending venting channel VC is provided. Examples of favorable leak-free connections will be further described in the below.

As shown in FIG. 2, the battery pack 1 may further comprise a housing 6 for the plurality of electrochemical battery cells 10, wherein the top cover 2 is attached to the housing 6 such that it forms a leak-free connection therebetween. In the shown example, a plurality of fasteners 61 are provided, configured to attach the top cover 2 to the housing 6.

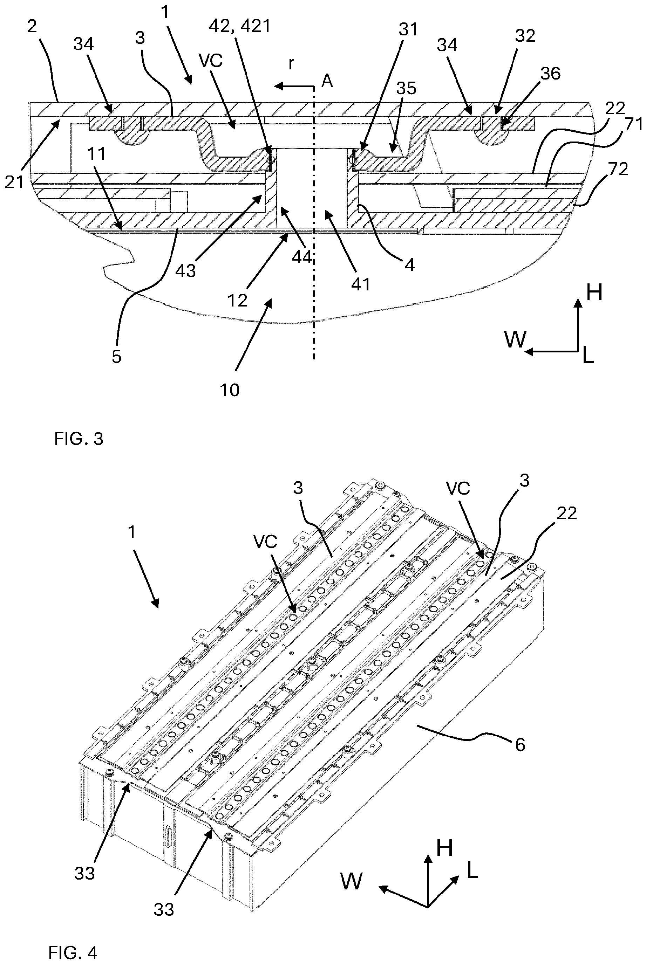

**FIG. 3** depicts a battery pack 1 in an enlarged sectional view according to an example. For example, the battery pack 1 in FIG. 3 may be the battery pack 1 as shown in FIG. 2. The sectional view is also here perpendicular to the longitudinal direction L.

As shown, the chimney member 44 may have a radial extension along a radial direction r which is perpendicular to a center axis A of the chimney member 4. The center axis A is as shown preferably parallel to the height direction H. In the shown example, the chimney member 4 and the venting channel member 3 are attached to each other via a radial sealing interface 42. More specifically, in the shown example, there is a sealing member 421, such as an O-ring, for example made of rubber, provided in the radial sealing interface 42.

In the shown example, the chimney member 4 is cylindrically formed with respect to its center axis A. The base of the cylindrically formed chimney member 4 may as shown be circular. However, other shapes are also conceivable, such as a chimney member with an oval base.

As shown in the FIG. 3 example, the radial sealing interface 42 may be provided at a radially outer peripheral surface 43 of the chimney member 4.

As further shown in the FIG. 3 example, the chimney member 4 may extend in the height direction H into a portion 31 of the venting channel member 3.

In the example shown in FIG. 3, the inside 21 of the top cover 2 which the venting channel member 3 is attached to is a ceiling surface 21 facing downwardly in the height direction H towards the top surfaces 11 of the battery cells 10. In addition, as shown, the top cover 2 may define an outermost border of the battery pack 1 towards an external environment.

The battery pack 1 as e.g. shown in FIG. 3 is configured such that the venting channel member 3 is offset from the top surfaces 11 of the battery cells 10, as seen in the height direction H. In other words, a gap is provided between the venting channel member 3 and the top surfaces 11 of the battery cells 10. This allows hot gases and/or particles to flow in the venting channel VC without negatively affecting the battery cells 10.

As further shown in the FIG. 3 example, the venting channel member 3 is preferably attached to the inside 21 of the top cover 2 such that it forms a leak-free longitudinally extending venting channel VC. For example, as shown, the venting channel member 3 may be attached to the inside 21 of the top cover 2 by heat staking 32 such that it forms a leak-free longitudinally extending venting channel VC. More specifically, a stud 32, or several studs along the longitudinal direction L, is/are provided which is/are fitted with an interference fit into a respective hole 36 of the venting channel member 3. As shown, after the staking is performed, the stud 32 may assume a mushroom shape. Heat staking may also be denoted thermoplastic staking.

In the example shown in e.g. FIG. 3, the battery pack 1 further comprises a carrier 5 for the at least one battery cell 10 of the plurality of electrochemical battery cells 10. As shown, the carrier 5 may be provided above the top surface 11 and may be arranged to carry busbars 71 and/or auxiliary electronic equipment 72, such as temperature sensors and/or voltage sensors for the battery cells 10. The chimney member 4 may be connected to or, as shown in FIG. 3, integrated with the carrier 5.

The battery pack 1 may as shown further comprise an intermediate wall member 22 which is provided in-between the top surfaces 11 and the inside 21 of the top cover 2. The intermediate wall member 22 may provide an additional protective cover for the top surfaces 11 such that hot gases and/or particles are prevented from reaching the top surfaces 11. As shown, the carrier 5 with the busbars 71 and/or auxiliary electronic equipment 72 may be provided and extend below the intermediate wall member 22, and the venting channel member 3 is preferably provided above the intermediate wall member 22, as seen in the height direction H.

As further shown in e.g. the FIG. 3 example, the venting channel member 3 may have a U-formed cross-sectional profile, as seen in a plane which is perpendicular to the longitudinal direction L.

In the shown example, the venting channel member 3 comprises a flat surface 34 facing upwardly in the height direction H outside at least one lateral side of the longitudinally extending venting channel VC, as seen in the width direction W. The flat surface 34 may as shown form an attachment interface between the inside 21 of the top cover 2 and the venting channel member 3. Even though heat staking is depicted, it shall be noted that other attachment techniques are also conceivable, such as welding and/or using any type of mechanical fastener. In the shown example, flat surfaces are provided outside each lateral side of the longitudinally extending venting channel VC, as seen in the width direction W.

**FIG. 4** is an exemplary battery pack 1 in a perspective view according to an example. For example, the battery pack 1 in FIG. 4 may be the battery pack 1 as shown in FIG. 2 and/or FIG. 3. In this example, to better illustrate the present disclosure, the top cover 2 is made transparent so that the venting channel member 3 can be seen in perspective view.

As shown, the longitudinally extending venting channel VC preferably comprises at least one discharge opening 33 for discharging hot gases and/or particles from the battery cells 10 to an external environment with respect to the battery pack 1. In the shown example, the discharge opening 33 is provided at an end of the battery pack 1, as seen along the longitudinal direction L. A discharge opening may additionally or alternatively be provided at the other end of the battery pack 1.

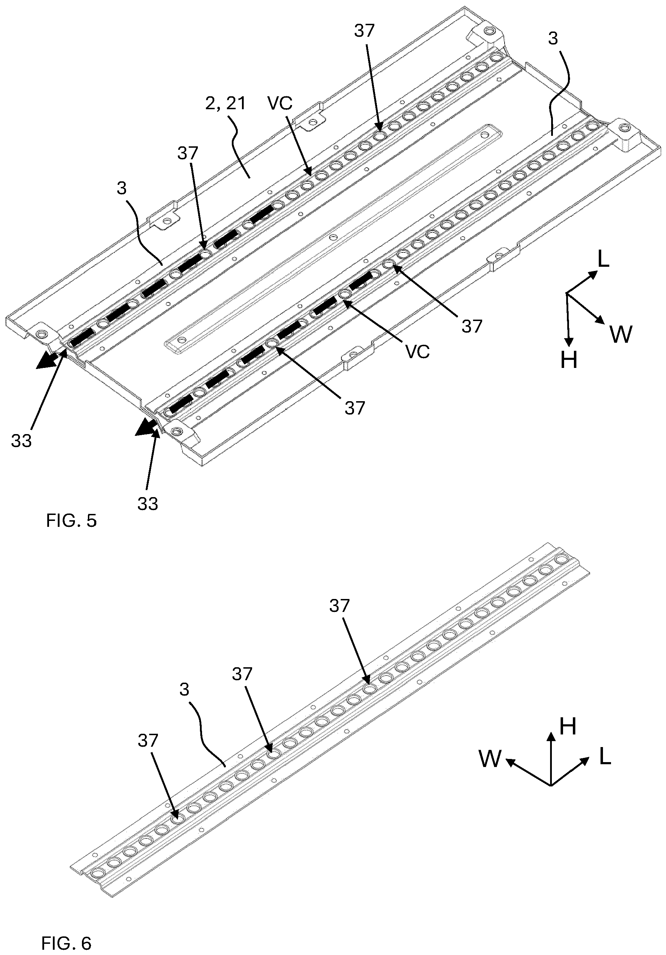

**FIG. 5** depicts a top cover 2 and venting channel members 3 in perspective view according to an example. **Fig. 6** depicts a venting channel member 3 in perspective view according to an example. The top cover 2 and venting channel members 3 in FIG. 5 and the venting channel member 3 in FIG. 6 may for example be the top cover 2 and/or venting channel member 3 shown in FIG. 2, Fig. 3 and/or FIG. 4. In FIG. 5, the top cover 2 has been flipped over so that the inside 21 is shown. The venting channel member 3 comprises a plurality of openings 37, or at least one opening, configured to be in fluid communication with a respective chimney member 4. In the shown examples, the venting channel member 3 comprises a plurality of openings 37 distributed along the longitudinal direction L.

As shown in e.g. FIGS. 2, 4 and 5, one venting channel member 3 may be provided for each row of electrochemical battery cells 10. More specifically, the examples depict two venting channel members 3.

In FIG. 5, two arrows further depict examples of flow directions of e.g. hot gases in the longitudinally extending venting channels VC to the discharge openings 33.

The venting channel member 3 may be an extruded component or a molded component. The venting channel member 3 may comprise or consist of a polymer, such as a fiber reinforced polymer.

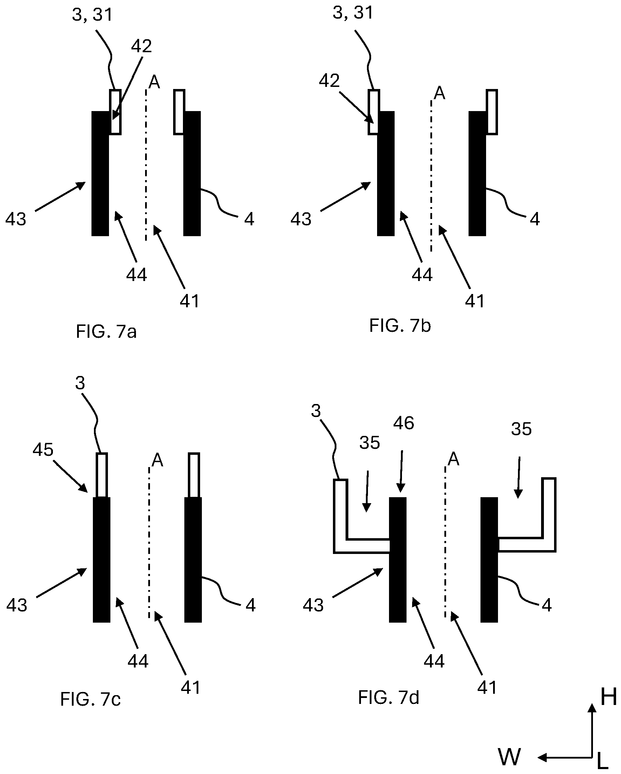

**FIGS. 7a****-d** are schematic sectional views of different possible connection interfaces of a chimney member 4 and a venting channel member 3 according to examples. In FIG. 7a, the radial sealing interface 42 is provided at a radially inner peripheral surface 44 of the chimney member 4. In FIG. 7b, as also illustrated in e.g. FIG. 3, the radial sealing interface 42 is provided at a radially outer peripheral surface 43 of the chimney member 4. FIG. 7c shows another example of a connection interface in which a leak-free connection between the chimney member 4 and the venting channel member 3 is provided. In this example, instead of a radial sealing interface, an axial sealing interface 45 is provided, as seen in respect of the center axis A. In other words, two axial surfaces, one of each member, abut each other. A sealing member (not shown), such as an O-ring, may be provided in the axial sealing interface.

FIG. 7a also shows an example of a chimney member 4 and a venting channel member 3, wherein a portion 31 of the venting channel member 3 extends in the height direction H into the fluid pathway 41 of the chimney member 4, and FIG. 7b shows an example wherein the chimney member 4 extends in the height direction H into a portion 31 of the venting channel member 3.

In FIG. 7d, an example is shown in which the venting channel member 3 comprises a longitudinally extending groove 35 on at least one lateral side of the longitudinally extending venting channel VC, as seen in the width direction W, which groove 35 is at least partly provided below a top portion 46 of the chimney member 4 such that particles can be received in the groove 35. In the shown example, one groove 35 is provided on each lateral side of the longitudinally extending venting channel VC. An example of the groove 35 is also depicted in FIG. 3.

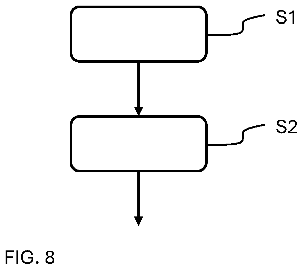

The present disclosure also relates to a method for manufacturing a battery pack 1 according to examples disclosed herein. An example flowchart of the method is depicted in **FIG. 8**. The method comprises:
S1: attaching the venting channel member 3 to the inside 21 of the top cover 2, and
S2: for the at least one battery cell 10 of the plurality of electrochemical battery cells 10, providing the chimney member 4 for the vent opening 12 such that it forms a fluid pathway 41 extending in the height direction H from the top surface 11 to the longitudinally extending venting channel VC.

In the following, features and possible feature combinations of the present disclosure are presented as a list of Examples.

Example 1: A battery pack (1) comprising a plurality of electrochemical battery cells (10), the battery pack (1) having a longitudinal extension in a longitudinal direction (L), a width extension in a width direction (W) and a height extension in a height direction (H), wherein:
- each battery cell (10) of the plurality of electrochemical battery cells (10) comprises a top surface (11) facing upwardly in the height direction (H), wherein the top surface (11) comprises a vent opening (12) for discharging hot gases and/or particles from the battery cell (10),
- the battery pack (1) comprises a top cover (2) arranged to cover the top surfaces (11) of the plurality of electrochemical battery cells (10),
- the battery pack (1) further comprises a venting channel member (3) which is attached to an inside (21) of the top cover (2) such that it forms a longitudinally extending venting channel (VC) between the venting channel member (3) and the top cover (2),
- the battery pack (1) further comprises, for at least one battery cell (10) of the plurality of electrochemical battery cells (10), a chimney member (4) for the vent opening (12), wherein the chimney member (4) is configured such that it forms a fluid pathway (41) extending in the height direction (H) from the top surface (11) to the longitudinally extending venting channel (VC).

Example 2: The battery pack (1) according to Example 1, wherein the chimney member (4) and the venting channel member (3) are configured such that a leak-free fluid connection from the vent opening (12) to the longitudinally extending venting channel (VC) is provided.

Example 3: The battery pack (1) according to Example 2, wherein the chimney member (44) has a radial extension along a radial direction (r) which is perpendicular to a center axis (A) thereof, wherein the center axis (A) is preferably parallel to the height direction (H), and wherein the chimney member (4) and the venting channel member (3) are attached to each other via a radial sealing interface (42).

Example 4: The battery pack (1) according to Example 3, wherein the radial sealing interface (42) is provided at a radially outer peripheral surface (43) of the chimney member (4) and/or at a radially inner peripheral surface (44) of the chimney member (4).

Example 5: The battery pack (1) according to any one of the preceding Examples, wherein the chimney member (4) extends in the height direction (H) into a portion (31) of the venting channel member (3).

Example 6: The battery pack (1) according to any one of the preceding Examples, wherein a portion of the venting channel member (3) extends in the height direction (H) into the fluid pathway (41) of the chimney member (4).

Example 7: The battery pack (1) according to any one of the preceding Examples, wherein the inside (21) of the top cover (2) which the venting channel member (3) is attached to is a ceiling surface (21) facing downwardly in the height direction (H) towards the top surfaces (11) of the battery cells (10).

Example 8: The battery pack (1) according to any one of the preceding Examples, wherein the battery pack (1) is configured such that the venting channel member (3) is offset from the top surfaces (11) of the battery cells (10), as seen in the height direction (H).

Example 9: The battery pack (1) according to any one of the preceding Examples, wherein the venting channel member (3) is attached to the inside (21) of the top cover (2) such that it forms a leak-free longitudinally extending venting channel (VC).

Example 10: The battery pack (1) according to Example 9, wherein the venting channel member (3) is attached to the inside (21) of the top cover (2) by heat staking (32) such that it forms a leak-free longitudinally extending venting channel (VC).

Example 11: The battery pack (1) according to any one of the preceding Examples, wherein the longitudinally extending venting channel (VC) comprises at least one discharge opening (33) for discharging hot gases and/or particles from the battery cells (10) to an external environment with respect to the battery pack (1).

Example 12: The battery pack (1) according to any one of the preceding Examples, further comprising, for the at least one battery cell (10) of the plurality of electrochemical battery cells (10), a carrier (5), wherein the carrier (5) is provided above the top surface (11) and is arranged to carry busbars and/or auxiliary electronic equipment, and wherein the chimney member (4) is connected to or integrated with the carrier (5).

Example 13: The battery pack (1) according to any one of the preceding Examples, wherein the venting channel member (3) has a U-formed cross-sectional profile, as seen in a plane which is perpendicular to the longitudinal direction (L).

Example 14: The battery pack (1) according to any one of the preceding Examples, wherein the venting channel member (3) is an extruded component or a molded component.

Example 15: The battery pack (1) according to any one of the preceding Examples, wherein the venting channel member (3) comprises or consists of a polymer, such as a fiber reinforced polymer.

Example 16: The battery pack (1) according to any one of the preceding Examples, wherein the venting channel member (3) comprises a flat surface (34) facing upwardly in the height direction (H) outside at least one lateral side of the longitudinally extending venting channel (VC), as seen in the width direction (W), wherein the flat surface (34) forms an attachment interface between the inside (21) of the top cover (2) and the venting channel member (3).

Example 17: The battery pack (1) according to any one of the preceding Examples, wherein the venting channel member (3) comprises a longitudinally extending groove (35) on at least one lateral side of the longitudinally extending venting channel (VC), as seen in the width direction (W), which groove (35) is at least partly provided below a top portion of the chimney (4) such that particles can be received in the groove (35).

Example 18: The battery pack (1) according to any one of the preceding Examples, wherein the plurality of electrochemical battery cells (10) are prismatic battery cells which are stacked next to each other along the longitudinal direction (L).

Example 19: The battery pack (1) according to any one of the preceding Examples, further comprising a housing (6) for the plurality of electrochemical battery cells (10), wherein the top cover (2) is attached to the housing (6) such that it forms a leak-free connection therebetween.

Example 20: A method for manufacturing a battery pack (1) according to any one of the preceding Examples, comprising:
- attaching (S 1) the venting channel member (3) to the inside of the top cover (2), and
- for the at least one battery cell (10) of the plurality of electrochemical battery cells (10), providing (S2) the chimney member (4) for the vent opening (12) such that it forms a fluid pathway (41) extending in the height direction (H) from the top surface (11) to the longitudinally extending venting channel (VC).

Example 21: A vehicle (100) comprising a battery pack (1) according to any one of Examples 1-19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (1) comprising a plurality of electrochemical battery cells (10), the battery pack (1) having a longitudinal extension in a longitudinal direction (L), a width extension in a width direction (W) and a height extension in a height direction (H), wherein:
- each battery cell (10) of the plurality of electrochemical battery cells (10) comprises a top surface (11) facing upwardly in the height direction (H), wherein the top surface (11) comprises a vent opening (12) for discharging hot gases and/or particles from the battery cell (10),
- the battery pack (1) comprises a top cover (2) arranged to cover the top surfaces (11) of the plurality of electrochemical battery cells (10),
- the battery pack (1) further comprises a venting channel member (3) which is attached to an inside (21) of the top cover (2) such that it forms a longitudinally extending venting channel (VC) between the venting channel member (3) and the top cover (2),
- the battery pack (1) further comprises, for at least one battery cell (10) of the plurality of electrochemical battery cells (10), a chimney member (4) for the vent opening (12), wherein the chimney member (4) is configured such that it forms a fluid pathway (41) extending in the height direction (H) from the top surface (11) to the longitudinally extending venting channel (VC).

2. The battery pack (1) according to claim 1, wherein the chimney member (4) and the venting channel member (3) are configured such that a leak-free fluid connection from the vent opening (12) to the longitudinally extending venting channel (VC) is provided.

3. The battery pack (1) according to claim 2, wherein the chimney member (44) has a radial extension along a radial direction (r) which is perpendicular to a center axis (A) thereof, wherein the center axis (A) is preferably parallel to the height direction (H), and wherein the chimney member (4) and the venting channel member (3) are attached to each other via a radial sealing interface (42).

4. The battery pack (1) according to claim 3, wherein the radial sealing interface (42) is provided at a radially outer peripheral surface (43) of the chimney member (4) and/or at a radially inner peripheral surface (44) of the chimney member (4).

5. The battery pack (1) according to any one of the preceding claims, wherein the chimney member (4) extends in the height direction (H) into a portion (31) of the venting channel member (3).

6. The battery pack (1) according to any one of the preceding claims, wherein a portion of the venting channel member (3) extends in the height direction (H) into the fluid pathway (41) of the chimney member (4).

7. The battery pack (1) according to any one of the preceding claims, wherein the inside (21) of the top cover (2) which the venting channel member (3) is attached to is a ceiling surface (21) facing downwardly in the height direction (H) towards the top surfaces (11) of the battery cells (10).

8. The battery pack (1) according to any one of the preceding claims, wherein the battery pack (1) is configured such that the venting channel member (3) is offset from the top surfaces (11) of the battery cells (10), as seen in the height direction (H).

9. The battery pack (1) according to any one of the preceding claims, wherein the longitudinally extending venting channel (VC) comprises at least one discharge opening (33) for discharging hot gases and/or particles from the battery cells (10) to an external environment with respect to the battery pack (1).

10. The battery pack (1) according to any one of the preceding claims, further comprising, for the at least one battery cell (10) of the plurality of electrochemical battery cells (10), a carrier (5), wherein the carrier (5) is provided above the top surface (11) and is arranged to carry busbars and/or auxiliary electronic equipment, and wherein the chimney member (4) is connected to or integrated with the carrier (5).

11. The battery pack (1) according to any one of the preceding claims, wherein the venting channel member (3) has a U-formed cross-sectional profile, as seen in a plane which is perpendicular to the longitudinal direction (L).

12. The battery pack (1) according to any one of the preceding claims, wherein the venting channel member (3) comprises a flat surface (34) facing upwardly in the height direction (H) outside at least one lateral side of the longitudinally extending venting channel (VC), as seen in the width direction (W), wherein the flat surface (34) forms an attachment interface between the inside (21) of the top cover (2) and the venting channel member (3).

13. The battery pack (1) according to any one of the preceding claims, wherein the venting channel member (3) comprises a longitudinally extending groove (35) on at least one lateral side of the longitudinally extending venting channel (VC), as seen in the width direction (W), which groove (35) is at least partly provided below a top portion of the chimney (4) such that particles can be received in the groove (35).

14. The battery pack (1) according to any one of the preceding claims, wherein the plurality of electrochemical battery cells (10) are prismatic battery cells which are stacked next to each other along the longitudinal direction (L).

15. A vehicle (100) comprising a battery pack (1) according to any one of claims 1-14.
